# FASCICULE DE BREVET EUROPEEN

(11) **EP 4 102 120 B1**
(45) Date de publication et mention de la délivrance du brevet: **05.06.2024**
(21) Numéro de dépôt: 22178096.8
(22) Date de dépôt: 09.06.2022
(51) Int. Cl.: F16L 5/04, H02G 3/22

(54) **DISPOSITIF DE PASSAGE D'ÉLÉMENTS FILIFORMES**
VORRICHTUNG ZUM DURCHFÜHREN VON FADENFÖRMIGEN ELEMENTEN
DEVICE FOR PASSING ELONGATED ELEMENTS

(30) Priorité: 11.06.2021 FR 2106184
(43) Date de publication de la demande: 14.12.2022
(73) Titulaire: SpeedInnov, 75008 Paris (FR)
(72) Inventeur: GUILLOTEAU, Isabelle, 17440 AYTRE (FR); PREVOST, Patrick, 17230 VILLEDOUX (FR); WARTANIAN, Berdj, 17690 ANGOULINS (FR)
(74) Mandataire: Lavoix

(56) Documents cités:
- EP-A1- 3 306 158
- WO-A1-2015/086367
- WO-A2-2011/088828
- US-B1- 7 507 912

## Description

La présente invention concerne un dispositif de passage d'éléments filiformes propre à être installé dans un véhicule du type comprenant :
- un cadre définissant une ouverture propre à laisser passer des éléments filiformes selon une direction sensiblement longitudinale et définissant deux bords opposés ; et
- deux peignes en matière intumescente fixés sur le cadre en regard l'un de l'autre de part et d'autre de l'ouverture et recouvrant entièrement l'ouverture, chaque peigne comprenant un talon fixé sur le cadre le long d'un bord de l'ouverture et plusieurs franges s'étendant depuis le talon en direction du bord opposé de l'ouverture.

Pour des raisons de sécurité, il est nécessaire de garantir une étanchéité complète au feu des cloisons internes et des coffres électriques dans les véhicules, notamment dans les véhicules ferroviaires.

Les cloisons internes et les coffres électriques sont souvent traversés en plusieurs endroits par des éléments filiformes, comme par exemple des câbles ou des tuyaux, créant des ouvertures qu'il est nécessaire d'étanchéifier.

Il est connu d'installer des plaques de mousse en matière intumescente pour étanchéifier ses ouvertures. Les plaques de mousse sont préalablement percées afin de laisser passer les câbles.

Cependant, cette solution présente l'inconvénient de manquer de flexibilité. En effet, en cas de modification du nombre de câbles ou du diamètre des câbles traversant l'ouverture, il est nécessaire de remplacer la plaque de mousse installée par une nouvelle plaque de mousse adaptée pour la nouvelle configuration des câbles.

Il est connu, notamment de WO 2015/086367, d'installer deux peignes comprenant des franges en matière intumescente. Ils sont disposés en regard l'un de l'autre dans un même plan avec les extrémités libres des franges accolées. Afin de traverser l'ouverture, les câbles passent entre les deux peignes en soulevant les franges.

Cependant, la déformation des franges des deux peignes réduit l'étanchéité au feu de la cloison.

Un but de l'invention est de proposer un dispositif flexible autorisant le passage de câble à travers une cloison tout en assurant une bonne étanchéité au feu de la cloison.

A cet effet, l'invention a pour objet un dispositif de passage d'éléments filiformes du type précité, caractérisé en ce que les franges des deux peignes se chevauchent dans une zone de chevauchement, la distance entre les extrémités libres des franges des deux peignes en chevauchement en l'absence d'éléments filiformes étant supérieure au quart, et de préférence supérieure à la moitié, de la longueur mesurée du talon à leur extrémité libre des franges du peigne ayant les franges les plus courtes.

Le dispositif de passage d'éléments filiformes selon l'invention comporte l'une ou plusieurs des caractéristiques suivantes, prise(s) isolement ou suivant toute combinaison techniquement possible :
- La distance entre les extrémités libres des franges des deux peignes en chevauchement en l'absence d'éléments filiformes est sensiblement égale à la longueur des franges du peigne ayant les franges les plus courtes.
- La largeur de chaque frange est comprise entre 5 et 10 millimètres.
- Le dispositif comprend au moins une vis de fixation du talon de chaque peigne sur le cadre.
- Le dispositif comprend des tôles métalliques de maintien fixées sur le talon de chaque peigne et enserrant le talon contre le cadre.
- Les franges des deux peignes ont des largeurs et/ou épaisseurs différentes.
- La matière intumescente formant les peignes a un degré d'intumescence supérieur à 10 à une température supérieure à 150°C.
- Les deux peignes ont des degrés d'intumescence différents.

L'invention a également pour objet un coffre électrique propre à être installé dans un véhicule, notamment ferroviaire, comportant une cloison et un dispositif de passage d'éléments filiformes du type précité, dans lequel le cadre est formé par la cloison dans laquelle est ménagée l'ouverture.

L'invention a également pour objet un véhicule, notamment ferroviaire, comprenant au moins un dispositif de passage d'éléments filiformes.

L'invention sera mieux comprise à la lecture de la description qui va suivre, donnée uniquement à titre d'exemple, et faite en se référant aux dessins annexés, sur lesquels :
- la figure 1 est une vue en perspective d'un coffre électrique de véhicule ferroviaire équipé d'un dispositif de passage d'éléments filiformes selon l'invention ;
- la figure 2 est une vue de face du dispositif de passage d'éléments filiformes de la figure 1 en l'absence d'élément filiforme ;
- la figure 3 est une vue en coupe selon l'axe A-A du dispositif de passage d'éléments filiformes de la figure 2 ;
- la figure 4 est une vue en perspective d'un peigne du dispositif de passage des figures 1 à 3 ;
- la figure 5 est une vue en coupe selon l'axe A-A du dispositif de passage d'éléments filiformes de la figure 2 traversé par un élément filiforme ;
- la figure 6 est une vue de face d'un deuxième mode de réalisation du dispositif de passage d'éléments filiformes selon l'invention ;
- la figure 7 est une vue en coupe selon l'axe B-B du dispositif de passage d'éléments filiformes de la figure 6 ; et
- la figure 8 est une vue de face d'un troisième mode de réalisation du dispositif de passage d'éléments filiformes selon l'invention.

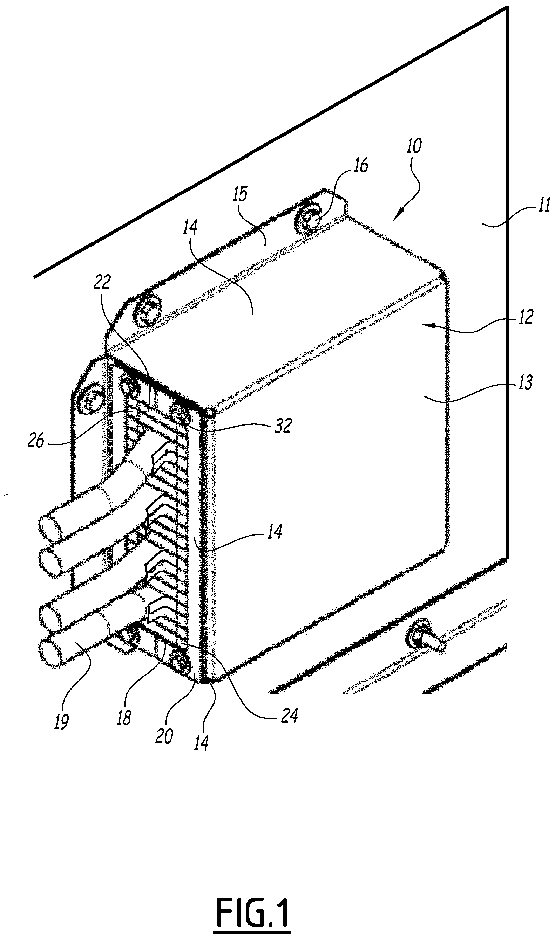

La figure 1 illustre un coffre électrique 10 plaqué contre une paroi 11 d'un véhicule, et plus particulièrement fixé à l'intérieur du véhicule. Le véhicule est par exemple un véhicule ferroviaire. En variante, le véhicule est un véhicule routier, comme un bus, un véhicule aérien ou un véhicule maritime.

Le coffre 10 comprend un boitier 12 présentant une forme de cuvette avec un fond plat 13, ici carré, bordé par quatre cloisons latérales 14, deux à deux perpendiculaires. Chaque cloison latérale est prolongée par un rebord de fixation extérieur 15. Le boitier 12 est plaqué contre la paroi 11 du véhicule ferroviaire et y est retenu par des vis 16 traversant les rebords de fixation 15. Le boitier 12 est formé par exemple d'une tôle pliée.

Le boitier 12 définit avec la paroi 11 un espace intérieur dans lequel des éléments électriques sont disposés.

L'une des cloisons 14 du boitier 12 comporte un dispositif 18 de passage d'éléments filiformes formés de câbles électriques, reliant les éléments électriques à l'extérieur du boitier 12.

Comme cela est visible sur les figures 1 à 3, le dispositif 18 de passage d'éléments filiformes comprend un cadre 20 définissant une ouverture 22 rectangulaire et deux peignes 24, 26 en matière intumescente souple disposés en regard l'un de l'autre et obturant complètement l'ouverture 22.

Dans l'exemple considéré, le cadre 20 est formé par la cloison 14 dans laquelle est ménagée l'ouverture 22.

L'ouverture 22 est traversée par les câbles 19 selon une direction perpendiculaire au plan de l'ouverture 22.

Le premier peigne 24 est fixé sur le cadre 20 le long d'un premier bord 28 de l'ouverture 22 et le second peigne 26, le long d'un second bord 30 de l'ouverture 22 opposé et parallèle au premier bord 28.

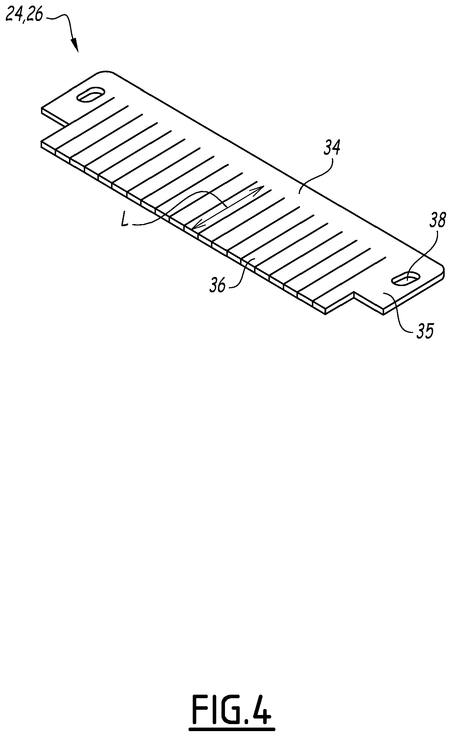

Comme illustré sur la figure 4, chaque peigne 24, 26 comprend un talon 34, depuis lequel il est fixé sur le cadre 20 le long d'un bord 28, 30 de l'ouverture 22 par deux vis 32, et un alignement de franges 36 s'étendant au droit de l'ouverture.

Les franges 36 s'étendent selon une direction sensiblement transversale en direction du bord opposé 28, 30 de l'ouverture 22.

Le talon 34 définit un bord transversal de chaque peigne 24, 26 prolongé par deux ailes de fixation 35 aux deux extrémités donnant ainsi une forme de U au talon 34. Il épouse la forme de l'ouverture 22 sur la moitié de son pourtour.

Les vis 32 sont reçues dans deux orifices 38 ménagés dans le talon 34 de chaque peigne 24, 26, et plus particulièrement sur les ailes de fixation 35.

Le dispositif de passage 18 comprend des tôles métalliques 40 en forme de U fixées sur le talon 34 de chaque peigne 24, 26 par les vis de fixation 32.

Les tôles métalliques 40 sont, par exemple, en aluminium.

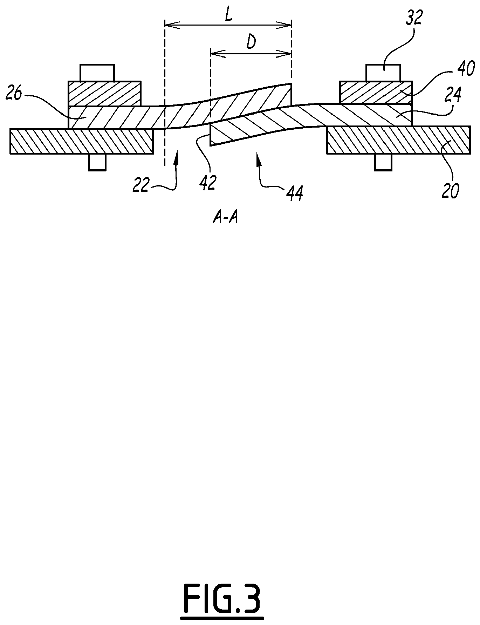

Ensemble, les tôles forment un cadre extérieur enserrant entièrement les deux peignes 24, 26 entre elles et la cloison 14, comme cela est visible sur la figure 3.

Chaque frange 36 s'étend entre le talon 34 et une extrémité libre 42 et est, par exemple, de forme rectangulaire. Elles s'étendent parallèlement les unes aux autres en étant séparées d'une entaille de largeur sensiblement nulle.

Avantageusement, toutes les franges 36 d'un même peigne 24, 26 sont de forme et de dimension identique.

La longueur L des franges 36 d'un même peigne 24, 26, définie comme la distance mesurée du talon 34 à l'extrémité libre 42, est par exemple comprise entre 10 mm et 200 mm.

La largeur des franges 36 d'un même peigne 24, 26, définie comme la distance séparant les deux interstices bordant la frange, est par exemple comprise entre 5 mm et 20 mm.

L'épaisseur des franges 36 d'un même peigne 24, 26, est par exemple, comprise entre 1 mm et 8 mm.

Selon un mode de réalisation préféré, comme illustré sur les figures 1 à 4, les deux peignes 24, 26 ont des dimensions identiques.

La longueur L des franges 36 des deux peignes 24, 26 est telle qu'en l'absence de câbles, les franges 36 des deux peignes 24, 26 se chevauchent en une zone de chevauchement 44.

On définit la distance de chevauchement D, comme la distance entre les extrémités libres 42 des franges 36 des deux peignes 24, 26 en chevauchement en l'absence de câbles 19.

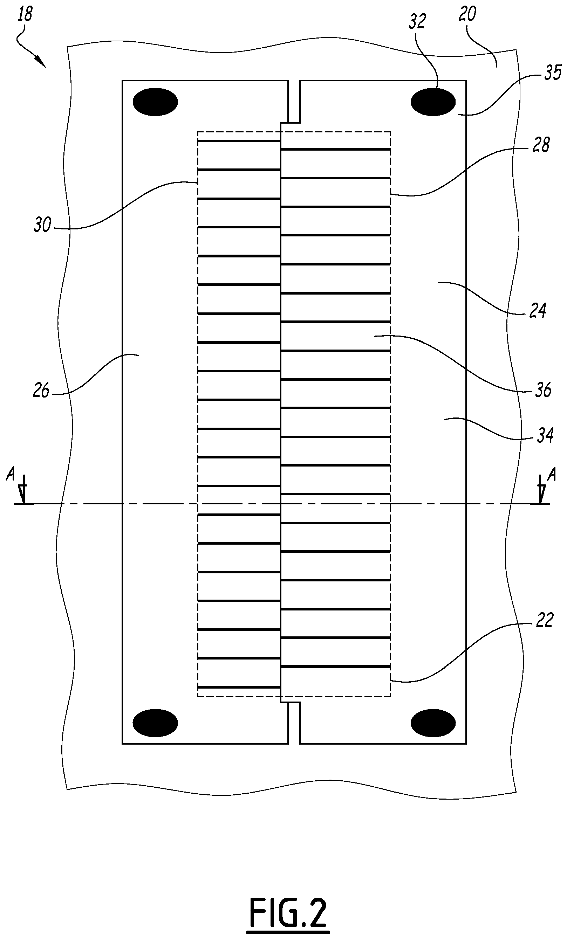

Selon l'invention, la distance D entre les extrémités libres 42 des franges 36 des deux peignes 24, 26 en chevauchement est supérieure au quart, et de préférence supérieure à la moitié, de la longueur L des franges 36 du peigne ayant les franges les plus courtes. Les franges 36 des deux peignes 24, 26 opposés se recouvrent partiellement, par exemple sur 2/3 de leur longueur L comme cela est visible sur les figures 2 et 3.

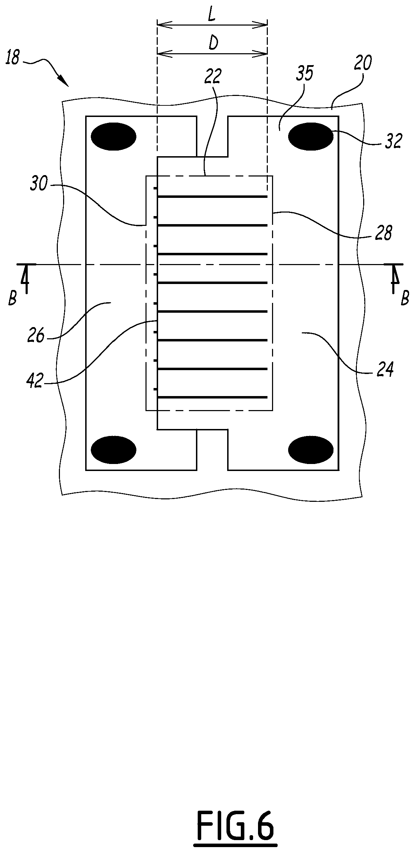

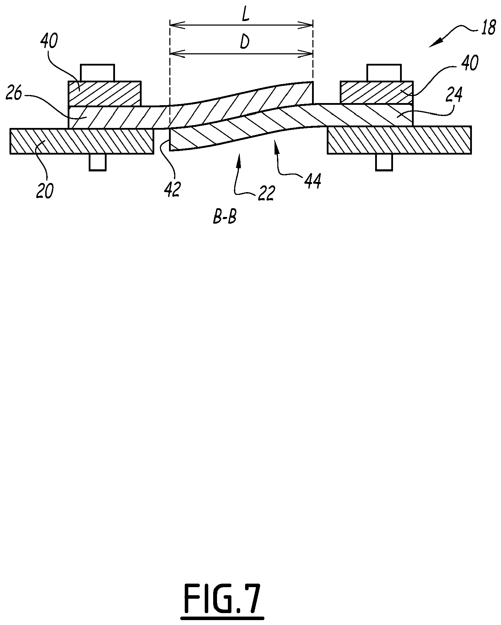

Dans le mode de réalisation des figures 6 et 7, la distance D entre les extrémités libres 42 des franges 36 des deux peignes 24, 26 en chevauchement est égale à la longueur L des franges 36. Les franges 36 des deux peignes 24, 26 opposés se recouvrent totalement.

La distance de chevauchement D est avantageusement supérieure à la dimension transversale des câbles 19 à faire passer.

Une matière intumescente utilisée pour former les peignes est une matière apte à subir une expansion en volume en cas d'exposition à une température élevée, soit en formant une mousse microporeuse, communément appelée « meringue », de volume supérieur au volume initial, soit en formant une pluralité de filaments.

On définit le degré d'intumescence comme le rapport entre le volume après expansion et le volume initial.

Avantageusement, la matière intumescente formant les peignes 24, 26 a un degré d'intumescence supérieur à 10, et avantageusement supérieur à 20, en cas d'exposition à une température supérieure à 150°C.

La matière intumescente formant les peignes est par exemple en graphite de degré d'intumescence sensiblement égal à 12 en cas d'exposition à une température supérieure à 180°C.

En cas de feu se déclarant à l'intérieur ou à l'extérieur du coffre électrique 10, la température dépassant les 150°C, les deux peignes 24, 26 subissent une expansion en volume, de sorte à recouvrir entièrement l'ouverture 22. Les câbles 19 sont ainsi englobés dans la matière intumescente des peignes 24, 26. L'ouverture 22 est complètement étanche au feu.

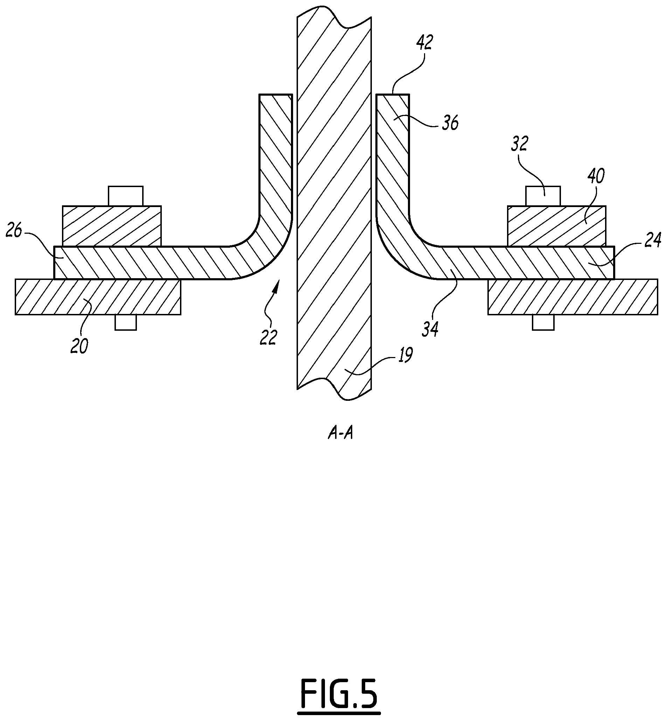

Comme illustré sur les figures 1 et 5, les franges 36 sont flexibles et sont déformées dans une direction sensiblement longitudinale, et reposent sur un câble 19 dans la zone de chevauchement 44.

Lorsqu'un câble 19 est inséré dans le dispositif 18 de passage selon une direction sensiblement longitudinale, le câble 19 pousse des franges 36. Chaque frange 36 en contact avec le câble 19 se soulève et se place le long de la périphérie du câble 19, de sorte à ne laisser aucun espace réduisant l'étanchéité.

En cas de feu se déclarant à l'intérieur ou à l'extérieur du coffre électrique 10, la température dépassant les 150°C, les deux peignes 24, 26 subissent une expansion en volume, de sorte à recouvrir entièrement l'ouverture 22. Les câbles 19 sont ainsi englobés dans la matière intumescente des peignes 24, 26. L'ouverture 22 est complètement étanche au feu.

Un tel dispositif de passage 18 permet donc de garantir une bonne étanchéité au feu. En effet, en l'absence de câbles, le chevauchement au moins partiel des franges 36 des peignes 24, 26 assure un recouvrement complet de l'ouverture 22. En présence de câbles, le fait que les franges 36 des peignes 24, 26 viennent se placer le long de la périphérie des câbles 19 permet d'assurer que la matière intumescente subit une expansion autour des câbles 19 en cas d'augmentation de la température.

De plus, contrairement à la solution avec des plaques de mousse, il n'est pas nécessaire de remplacer le dispositif en cas de modification du nombre de câbles ou du diamètre des câbles traversant l'ouverture.

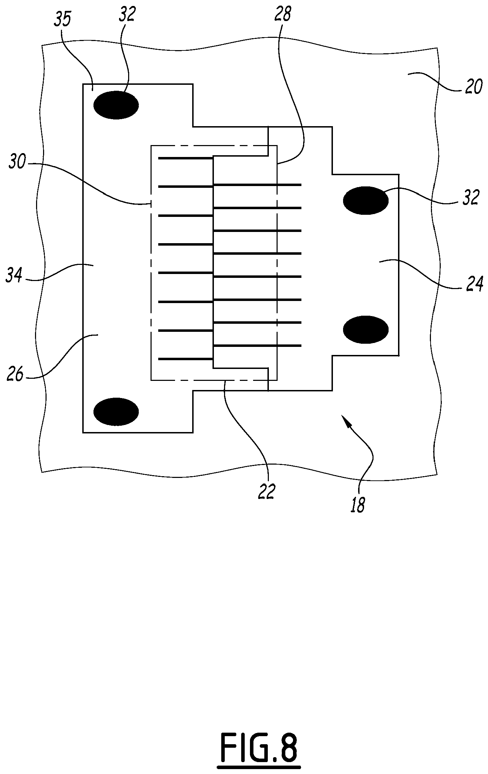

Dans une variante illustrée sur la figure 8, les deux peignes 24, 26 ont des dimensions différentes. Les franges 36 des deux peignes 24, 26 ont des largeurs et/ou épaisseurs différentes.

Les franges 36 du deuxième peigne 26 ont une largeur supérieure aux franges 36 du premier peigne 24.

De plus, le cadre 20 étant plus limité en place le long du bord 28 de l'ouverture 22, le talon 34 du premier peigne 24 est choisi plus petit que le talon 34 du deuxième peigne 26. Afin d'économiser de la place, le talon 34 du peigne 24 ne comporte pas d'ailes de fixation 35. Les vis 32 de fixation du peigne 24 sont reçues dans deux orifices 38 ménagés dans la partie rectangulaire du talon 34.

Les deux peignes ont des degrés d'intumescence différents. Le peigne 24 étant plus petit, celui-ci a un degré d'intumescence supérieur de sorte qu'après expansion, les deux peignes 24, 26 occupent le même volume.

Dans une variante, le dispositif de passage 18 comporte deux peignes supplémentaires fixés en regard des deux premiers peignes initialement décrit de l'autre côté du cadre 20. Avantageusement, les deux peignes supplémentaires sont fixés par le biais des mêmes vis de fixation 32 que les deux premiers et sont également protégés par une tôle métallique. La présence de deux peignes supplémentaires permet d'augmenter l'étanchéité au feu.

Selon un autre mode de réalisation, le cadre 20 est formé par une cloison interne du véhicule, notamment ferroviaire, dans laquelle est ménagée une ouverture 22. La cloison interne du véhicule ferroviaire est, par exemple, une cloison d'un local de service ou d'un compartiment d'une salle de passager. Les éléments filiformes 19 sont, par exemple, des tuyaux d'alimentation en air et/ou en eau du local de service.

## Revendications

1. Dispositif de passage d'éléments filiformes propre à être installé dans un véhicule comprenant :
- un cadre (20) définissant une ouverture (22) propre à laisser passer des éléments filiformes (19) selon une direction sensiblement longitudinale et définissant deux bords opposés (28, 30) ; et
- deux peignes (24, 26) en matière intumescente fixés sur le cadre (20) en regard l'un de l'autre de part et d'autre de l'ouverture (22) et recouvrant entièrement l'ouverture (22), chaque peigne (24, 26) comprenant un talon (34) fixé sur le cadre (20) le long d'un bord (28, 30) de l'ouverture (22) et plusieurs franges (36) s'étendant depuis le talon (34) en direction du bord (28, 30) opposé de l'ouverture (22),
**caractérisé en ce que** les franges (36) des deux peignes (24, 26) se chevauchent dans une zone de chevauchement (44), la distance (D) entre les extrémités libres (42) des franges (36) des deux peignes (24, 26) en chevauchement en l'absence d'éléments filiformes (19) étant supérieure au quart, et de préférence supérieure à la moitié, de la longueur (L) mesurée du talon (34) à leur extrémité libre (42) des franges (36) du peigne (24, 26) ayant les franges (36) les plus courtes.

2. Dispositif de passage d'éléments filiformes selon la revendication 1, dans lequel la distance (D) entre les extrémités libres (42) des franges (36) des deux peignes (24, 26) en chevauchement en l'absence d'éléments filiformes (19) est sensiblement égale à la longueur (L) des franges (36) du peigne (24, 26) ayant les franges (36) les plus courtes.

3. Dispositif de passage d'éléments filiformes selon la revendication 1 ou 2, dans lequel la largeur de chaque frange (36) est comprise entre 5 et 10 millimètres.

4. Dispositif de passage d'éléments filiformes selon l'une quelconque des revendications précédentes comprenant au moins une vis de fixation (32) du talon (34) de chaque peigne (24, 26) sur le cadre (20).

5. Dispositif de passage d'éléments filiformes selon l'une quelconque des revendications précédentes comprenant des tôles métalliques (40) de maintien fixées sur le talon (34) de chaque peigne (24, 26) et enserrant le talon (34) contre le cadre (20).

6. Dispositif de passage d'éléments filiformes selon l'une quelconque des revendications précédentes, dans lequel les franges (36) des deux peignes (24, 26) ont des largeurs et/ou épaisseurs différentes.

7. Dispositif de passage d'éléments filiformes selon l'une quelconque des revendications précédentes, dans lequel la matière intumescente formant les peignes (24, 26) a un degré d'intumescence supérieur à 10 à une température supérieure à 150°C.

8. Dispositif de passage d'éléments filiformes selon l'une quelconque des revendications précédentes, dans lequel les deux peignes (24, 26) ont des degrés d'intumescence différents.

9. Coffre électrique propre à être installé dans un véhicule, notamment ferroviaire, comportant une cloison (14) et un dispositif de passage d'éléments filiformes (19) selon l'une quelconque des revendications précédentes, dans lequel le cadre (20) est formé par la cloison (14) dans laquelle est ménagée l'ouverture (22).

10. Véhicule, notamment ferroviaire, comprenant au moins un dispositif de passage d'éléments filiformes (19) selon l'une quelconque des revendications 1 à 8.

## Patentansprüche

1. Vorrichtung zum Durchführen von fadenförmigen Elementen, die geeignet ist, um in ein Fahrzeug installiert zu werden, umfassend:
- einen Rahmen (20), der eine Öffnung (22) definiert, die geeignet ist, um fadenförmige Elemente (19) entlang einer im Wesentlichen longitudinalen Richtung durchzulassen, und der zwei gegenüberliegende Ränder (28, 30) definiert; und
- zwei Kämme (24, 26) aus intumeszierendem Material, die an dem Rahmen (20) einander gegenüberliegend auf beiden Seiten der Öffnung (22) befestigt sind und die Öffnung (22) vollständig bedecken, jeder Kamm (24, 26) umfassend einen Absatz (34), der an dem Rahmen (20) entlang eines Rands (28, 30) der Öffnung (22) befestigt ist, und mehrere Fransen (36), die sich von dem Absatz (34) in Richtung des gegenüberliegenden Rands (28, 30) der Öffnung (22) erstrecken,
**dadurch gekennzeichnet, dass** sich die Fransen (36) der zwei Kämme (24, 26) in einem Überlappungsbereich (44) überlappen, wobei der Abstand (D) zwischen den freien Enden (42) der Fransen (36) der zwei überlappenden Kämme (24, 26) bei Abwesenheit von fadenförmigen Elementen (19) größer ist als ein Viertel und vorzugsweise größer ist als die Hälfte der Länge (L), die von dem Absatz (34) bis zu ihrem freien Ende (42) der Fransen (36) des Kamms (24, 26) mit den kürzesten Fransen (36) gemessen wird.

2. Vorrichtung zum Durchführen von fadenförmigen Elementen nach Anspruch 1, wobei der Abstand (D) zwischen den freien Enden (42) der Fransen (36) der zwei sich überlappenden Kämme (24, 26) bei Abwesenheit von fadenförmigen Elementen (19) im Wesentlichen gleich wie die Länge (L) der Fransen (36) des Kamms (24, 26) mit den kürzesten Fransen (36) ist.

3. Vorrichtung zum Durchführen von fadenförmigen Elementen nach Anspruch 1 oder 2, wobei die Breite jeder Franse (36) zwischen 5 und 10 Millimetern liegt.

4. Vorrichtung zum Durchführen von fadenförmigen Elementen nach einem der vorherigen Ansprüche, umfassend mindestens eine Befestigungsschraube (32) des Absatzes (34) von jedem Kamm (24, 26) an dem Rahmen (20).

5. Vorrichtung zum Durchführen von fadenförmigen Elementen nach einem der vorherigen Ansprüche, umfassend metallische Halteblechen (40), die an dem Absatz (34) von jedem Kamm (24, 26) befestigt sind und den Absatz (34) gegen den Rahmen (20) umschließen.

6. Vorrichtung zum Durchführen von fadenförmigen Elementen nach einem der vorherigen Ansprüche, wobei die Fransen (36) der zwei Kämme (24, 26) unterschiedliche Breiten und/oder Stärken aufweisen.

7. Vorrichtung zum Durchführen von fadenförmigen Elementen nach einem der vorherigen Ansprüche, wobei das intumeszierende Material, das die Kämme (24, 26) bildet, bei einer Temperatur von über 150 °C einen Intumeszenzgrad von über 10 aufweist.

8. Vorrichtung zum Durchführen von fadenförmigen Elementen nach einem der vorherigen Ansprüche, wobei die zwei Kämme (24, 26) unterschiedliche Intumeszenzgrade aufweisen.

9. Elektrischer Kasten, der zur Installation in ein Fahrzeug, insbesondere ein Schienenfahrzeug, geeignet ist, umfassend eine Trennwand (14) und eine Vorrichtung (19) zum Durchführen von fadenförmigen Elementen nach einem der vorherigen Ansprüche, wobei der Rahmen (20) von der Trennwand (14) gebildet ist, in der die Öffnung (22) ausgebildet ist.

10. Fahrzeug, insbesondere Schienenfahrzeug, umfassend mindestens eine Vorrichtung zum Durchführen von fadenförmigen Elementen (19) nach einem der Ansprüche 1 bis 8.

## Claims

1. A device for passing thread-like elements, suitable for installation in a vehicle, comprising:
- a frame (20) defining an opening (22) suitable for passing thread-like elements (19) in a substantially longitudinal direction and defining two opposite edges (28, 30); and
- two combs (24, 26) made of intumescent material fixed to the frame (20) opposite each other on either side of the opening (22) and completely covering the opening (22), each comb (24, 26) comprising a heel (34) fixed to the frame (20) along one edge (28, 30) of the opening (22) and a plurality of teeth (36) extending from the heel (34) towards the opposite edge (28, 30) of the opening (22),
**characterised in that** the teeth (36) of the two combs (24, 26) overlap in an overlap zone (44), the distance (D) between the free ends (42) of the teeth (36) of the two overlapping combs (24, 26) in the absence of thread-like elements (19) being greater than one-quarter, and preferably greater than half, of the length (L) measured from the heel (34) to the free end (42) of the teeth (36) of the comb (24, 26) having the shorter teeth (36).

2. The device for passing thread-like elements according to claim 1, in which the distance (D) between the free ends (42) of the teeth (36) of the two overlapping combs (24, 26) in the absence of thread-like elements (19) is substantially equal to the length (L) of the teeth (36) of the comb (24, 26) having the shorter teeth (36).

3. The device for passing thread-like elements according to claim 1 or 2, in which the width of each tooth (36) is between 5 and 10 millimetres.

4. The device for passing thread-like elements according to any one of the preceding claims, comprising at least one screw (32) for fixing the heel (34) of each comb (24, 26) to the frame (20).

5. The device for passing thread-like elements according to any one of the preceding claims, comprising metal retaining plates (40) fixed to the heel (34) of each comb (24, 26) and clamping the heel (34) against the frame (20).

6. The device for passing thread-like elements according to any one of the preceding claims, in which the teeth (36) of the two combs (24, 26) have different widths and/or thicknesses.

7. The device for passing thread-like elements according to any one of the preceding claims, in which the intumescent material forming the combs (24, 26) has a degree of intumescence greater than 10 at a temperature greater than 150 °C.

8. The device for passing thread-like elements according to any one of the preceding claims, in which the two combs (24, 26) have different degrees of intumescence.

9. An electrical box suitable for installation in a vehicle, in particular a railway vehicle, comprising a partition (14) and a device for passing thread-like elements (19) according to any one of the preceding claims, in which the frame (20) is formed by the partition (14) in which the opening (22) is made.

10. A vehicle, particularly a railway vehicle, comprising at least one device for passing thread-like elements (19) according to any of claims 1 to 8.
